# EUROPEAN PATENT APPLICATION

(11) **EP 2 348 247 A1**
(43) Date of publication of application: **27.07.2011**
(21) Application number: 09824691.1
(22) Date of filing: 08.10.2009
(51) Int. Cl.: F21S 2/00, H04M 1/02, H04M 1/22, F21Y 101/02

(54) **LIGHT GUIDE PLATE, WIRING MODULE AND ELECTRONIC DEVICE**

(30) Priority: 07.11.2008 JP 2008286195
(71) Applicant: Sumitomo Electric Industries, Ltd., Chuo-ku Osaka-shi Osaka 541-0041 (JP)
(72) Inventor: MISHIMA, Hidehiko, Osaka-shi Osaka 554-0024 (JP)
(74) Representative: Cross, Rupert Edward Blount
(86) International application number: PCT/JP2009/067531
(87) International publication number: WO 2010/052991

(57) **Abstract**

A light guide plate has a substantially flat shape and used as a backlight for an electronic appliance. The light guide plate introduces thereinto illuminating light emitted from a light source through part of a side surface thereof and directs the illuminating light out of the light guide plate through light emitting parts formed in a main surface of the light guide plate, in which a light-receiving surface for the illuminating light on the side surface is inclined relative to a plane perpendicular to the main surface. Thus, illuminating light is refracted, enters the light guide plate, and propagates in the light guide plate while undergoing total internal reflection. Light can be effectively directed out of the light guide plate through the light emitting parts. Thus, a light guide plate with which power saving and reduction in thickness can be achieved by improving light use efficiency, a wiring module in which the light guide plate is used, and an electronic appliance in which the light guide plate or the wiring module is used are provided.

## Description

### Technical Field

The present invention relates to light guide plates, wiring modules, and electronic appliances. In particular, the present invention relates to a light guide plate that is assembled into an electronic appliance such as a mobile-phone and used to back-light input keys, a liquid crystal display screen, and so forth, a wiring module in which the light guide plate is used, and an electronic appliance in which the light guide plate or the wiring module is used.

### Background Art

To date, in an electronic appliance such as a mobile-phone, a plurality of light sources such as light emitting diodes (LEDs) have been disposed at the back of input keys in order to back-light the input keys and a liquid crystal display screen. However, more recently, a light guide plate is used as the light source for backlight. Here, the light guide plate back-lights the input keys and the liquid crystal display screens by directing thereinto illuminating light from the light sources such as LEDs through a side surface thereof and emitting the light through a main surface thereof. With this light guide plate, the number of light sources such as LEDs can be decreased to about one to two, thereby reducing electric power consumption and achieving reduction in thickness.

In order to further reduce electric power consumption, improvement of light use efficiency is required. For this purpose, a light guide plate provided with a light emitting structure in a surface thereof has also been proposed (Patent Literature 1). In addition, in order to improve combining efficiency (incident efficiency) of illuminating light from a light source to a light guide plate even when the thickness of the light guide plate is reduced, a light guide plate having a light-receiving unit, which is enlarged in a tapered shape to the size of an LED used as the light source, on a side surface thereof has also been proposed (Patent Literature 2).

### Summary of Invention

### Technical Problem

Since electronic appliances such as mobile-phones feature more advanced capabilities and electric power consumption thereof tends to increase, there is an increasing need for power saving. In addition, since the number of parts to be mounted in such an electronic appliance tends to increase, reduction in the thicknesses of mounted parts is also required due to limited space allocated to mounted parts. For these purposes, light guide plates and wiring modules using such a light guide plates to be mounted in such electronic appliances similarly need power saving and reduction in thickness.

In general, light that enters a light guide plate propagates while undergoing repeated total internal reflection between upper and lower surfaces of the light guide plate. The light guide plate disclosed in Patent Literature 1 above includes a light emitting structure in a main surface of the light guide plate in order to eliminate conditions for total internal reflection and to direct the propagated light out of the light guide plate through the main surface. Despite the above efforts, there still are many wasted rays of light that pass through the light guide plate without being emitted and without back-lighting input keys or a liquid crystal display screen. This is not a sufficient solution in terms of light use efficiency.
In addition, reduction in the thickness of the light guide plate decreases an area of a light-receiving surface provided in a side surface of the light guide plate. This increases loss of light and degrades light combining efficiency when light emitted from the light source enters the light guide plate and is combined with the light guide plate. In a light guide plate disclosed in Patent Literature 2 above, improvement of combining efficiency of light from the light source to the light guide plate is attempted by enlarging the side surface in a tapered shape. However, likewise, there still are many wasted rays of light that are not emitted through the light emitting structure, and there still is a problem in that emitting efficiency is low despite improvement in combining efficiency.

An object of the present invention is to provide a light guide plate with which power saving and reduction in thickness can be achieved by improving light use efficiency, a wiring module in which the light guide plate is used, and an electronic appliance in which the light guide plate or the wiring module is used.

### Solution to Problem

To achieve above-described object, a light guide plate according to a first invention has a substantially flat shape and used as a backlight for an electronic appliance, the light guide plate introducing thereinto illuminating light emitted from a light source through part of a side surface thereof and directing the illuminating light out of the light guide plate through light emitting parts formed in a main surface of the light guide plate, in which a light-receiving surface for the illuminating light on the side surface is inclined relative to a plane perpendicular to the main surface.

Illuminating light that enters the light guide plate from the light source propagates in the light guide plate while undergoing repeated total internal reflection between upper and lower surfaces of the light guide plate. Conditions of total internal reflection are not met due to the light emitting parts including concavo-convex structures and the like defined by protrusions and dents formed in the main surface of the light guide plate. Rays of illuminating light are emitted from those positions and backlight input keys and a liquid crystal display screen. However, there are also many rays of the illuminating light that enter the light guide plate in a direction substantially parallel to the main surface of the light guide plate. Such rays of the illuminating light do not undergo total internal reflection and pass through the light guide plate in straight paths, thereby being wasted without being used in back-lighting.

According to the first invention, the light-receiving surface is inclined relative to a plane perpendicular to the main surface. This causes illuminating light emitted from the light source to be refracted and to enter the light guide surface. Thus, many of rays of the illuminating light having entered the light guide plate propagate in the light guide plate while undergoing total internal reflection. As a result, rays of the illuminating light that pass through the light guide plate in straight paths are almost eliminated. When light emitting parts are provided in the main surface of the light guide plate, illuminating light is efficiently emitted, and can backlight the input keys and the liquid crystal display screen. That is, by effectively using rays of light that have not been emitted through the main surface and that have been wasted, light use efficiency can be improved. Thus, power saving can be achieved. In addition, even when light combining efficiency of illuminating light between the light source and the light guide plate is decreased due to reduction in the thickness of the light guide plate, light use efficiency of illuminating light having entered the light guide plate can be improved. This can maintain brightness in back-lighting the input keys and liquid crystal display screen. Thus, the light guide plate according to the first invention is suitable for reducing the thickness of the light guide plate.

The light guide plate according to a second invention is formed such that an inclination angle of the light-receiving surface is in a range of 30 to 60 degrees relative to the plane perpendicular to the main surface in the first invention.

If the inclination angle is smaller than 30 degrees, illuminating light does not undergo total internal reflection in the light guide plate, or rays of the illuminating light that are hardly reflected in the light guide plate and pass through the light guide plate increase. Thus, the amount of light that is wasted by not being used in back-lighting increases. In contrast, if the inclination angle is larger than 60 degrees, the amount of light reflected off the inclined light-receiving surface increases. This degrades the combining efficiency and decreases the absolute amount of illuminating light that is allowed to enter the light guide plate. Therefore, the inclination angle is preferably 30 to 60 degrees in terms of improving light use efficiency in the entirety of the light guide plate.

In the light guide plate according to a third invention, the side surface has a plurality of the inclined light-receiving surfaces in the first or the second invention.

Illuminating light emitted from the light source is not necessarily parallel light but has a certain divergence angle. According to the third invention, the side surface has a plurality of the inclined light-receiving surfaces. Therefore, even when illuminating light having a divergence angle has entered, rays of the illuminating light that pass through the light guide plate in straight paths can be decreased as much as possible. Thus, it is desirable in terms of further improving light use efficiency. In addition, the inclination angles of the plurality of light-receiving surfaces are not necessarily the same. The inclination angles may be angles different from each other. Optimum angles adjusted to a divergence angle of illuminating light emitted from the light source can be selected.

In the light guide plate according to a fourth invention, the light-receiving surface further includes a groove that extends in a direction substantially parallel to the main surface in the first to third inventions.

According to the fourth invention, an incident angle of illuminating light that enters the light guide plate can be more finely deflected and rays of the illuminating light that pass through the light guide plate in straight paths in a light guiding direction can be further decreased. Thus, light use efficiency can be further improved.

In the light guide plate according to a fifth invention, an antireflection coat (AR coat) layer is formed on the light-receiving surface in the first to forth inventions.

According to the fifth invention, since light is easily reflected off the inclined light-receiving surface, providing an AR coat can improve light combining efficiency. As a result, more rays of illuminating light can be introduced into the light guide plate, thereby making it possible to improve light use efficiency in the entirety of the light guide plate.

In the light guide plate according to a sixth invention, the light emitting parts are concavo-convex patterns defined by protrusions or dents formed in the main surface, or printing patterns including a light scattering agent in the first to fifth inventions. Each of these light emitting parts is formed such that, as the distance between the pattern and the light source increases, a distance between the pattern and an adjacent pattern is reduced, or a size of the pattern is increased in order to increase a density of the patterns.

According to the sixth invention, as a distance between the pattern and the light source increases, the density of the patterns that define the light-emitting parts increases. Thus, when the light guide plate is seen in plan view, the input keys and the liquid crystal display screen can be generally back-lit uniformly without unevenness while light use efficiency is improved.

A wiring module according to a seventh invention includes a flexible printed wiring circuit that includes a light source placement part and a switch part, a light-reflecting member laminated on the flexible printed wiring circuit, and the light guide plate disposed over the light-reflecting member.

According to the seventh invention, a wiring module that back-lights key switches in an electronic appliance can be obtained. With this wiring module, light use efficiency can be improved and power saving and reduction in thickness can be achieved.

An electronic appliance according to an eighth invention includes the light guide plate according to the first to sixth inventions, or the wiring module according to the seventh invention.

According to the eighth invention, a mobile-phone, a handheld terminal, and so forth with reliable back-lighting can be obtained while power saving and reduction in thickness can be achieved.

### Advantageous Effects of Invention

According to the present invention, a light guide plate with which power saving and reduction in thickness can be achieved by improving light use efficiency, a wiring module in which the light guide plate is used, and an electronic appliance in which the light guide plate or the wiring module is used can be provided.

### Brief Description of Drawings

[Fig. 1] Figure 1 is a perspective view schematically illustrating a structure of a mobile-phone according to a first embodiment of the present invention.
[Fig. 2] Figure 2 is an enlarged plan view schematically illustrating an input module of the mobile-phone illustrated in Fig. 1.
[Fig. 3] Figure 3 is a schematic sectional view of the input module taken along line II-II in Fig. 2.
[Fig. 4] The (a) portion of Fig.4 is an enlarged sectional view of part A in Fig. 3, which is in the vicinity of a light-receiving surface of a light guide plate. The (b) to (i) portions of Fig.4 illustrate modifications to the part illustrated in the (a) portion of Fig. 4.
[Fig. 5] Figure 5 is a graph illustrating the relationship between an inclination angle of the light-receiving surface and the amount of incident light incident upon light emitting parts formed in a main surface of the light guide plate.
[Fig. 6] Figure 6 is a plan view illustrating patterns of the light emitting parts formed in the main surface of the light guide plate according to a third modification to the embodiment.
[Fig. 7] Figure 7 is a plan view illustrating the patterns of the light emitting parts formed in the main surface of the light guide plate according to a fourth modification to the embodiment.
[Fig. 8] Figure 8 is a plan view illustrating the patterns of the light emitting parts formed in the main surface of the light guide plate according to a fifth modification to the embodiment.

### Description of Embodiments

Hereafter, embodiments of the present invention will be described. In the description of the drawings, like elements are denoted by like reference numerals and redundant explanations are thus omitted. In addition, dimensional ratios in the drawings do not necessarily coincide with those in the description.

### (First Embodiment)

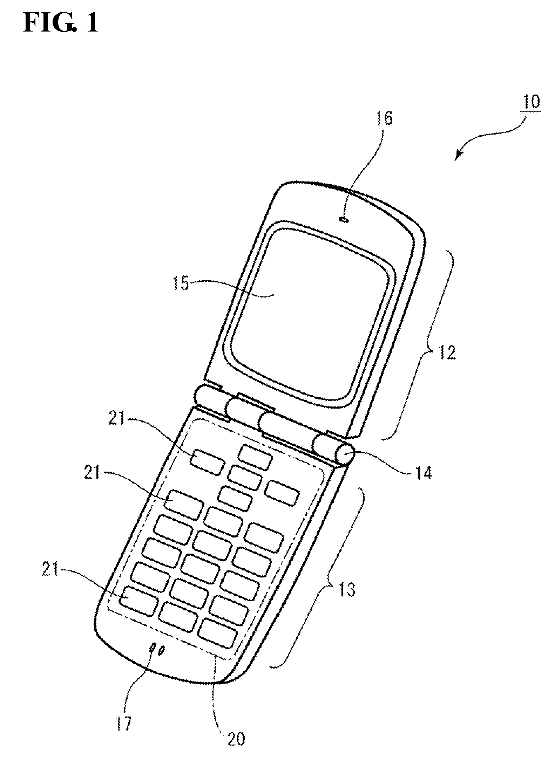

Figure 1 is a perspective view schematically illustrating a structure of a mobile-phone according to the first embodiment of the present invention. As illustrated in Fig. 1, a mobile-phone 10 includes an input part 13 for inputting information to be communicated and a display part 12 for displaying a variety of information. The display part 12 is rotatably connected to the input part 13 with a hinge part 14 so as to have an openable and closable structure (folding structure). The input part 13 includes a microphone 17 at a position opposite the hinge part 14, and the display part 12 includes a speaker 16 at a position opposite the hinge part 14.

The input part 13 includes a plurality of input keys 21 that are arranged therein and define an input module 20. Numbers and characters are printed on the input keys 21 in order to input a variety of information. The display part 12 includes a liquid crystal display device 15 in order to display a variety of information.

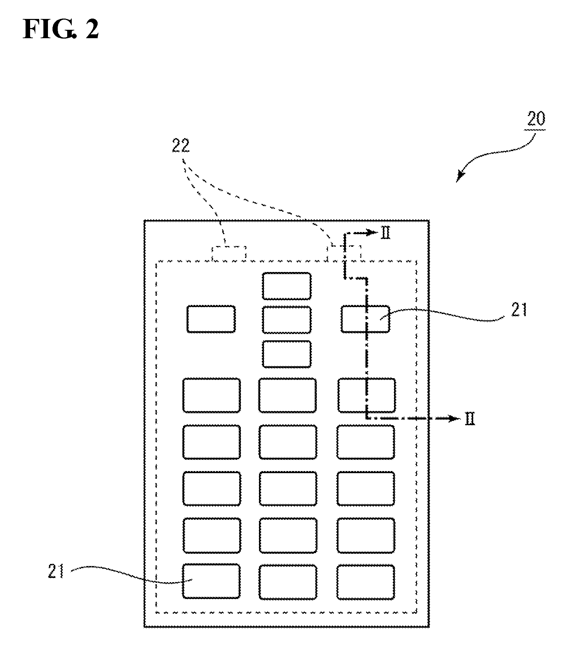

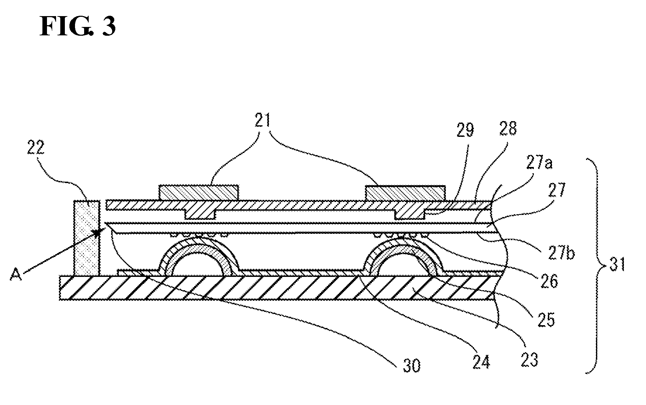

Figure 2 is an enlarged plan view schematically illustrating the input module of the mobile-phone illustrated in Fig. 1. Figure 3 is a schematic sectional view of the input module taken along line II-II in Fig. 2.

As illustrated in Figs. 2 and 3, the input module 20 includes a light source 22, a wiring module 31, which propagates illuminating light emitted from the light source 22 and electrically communicates input information, a rubber sheet 28 disposed on the wiring module 31, and the input keys 21 disposed on and supported by the rubber sheet 28.

The wiring module 31 includes a flexible printed wiring circuit 23 provided with dome switches 25, a light-reflecting member 24 that is laminated on the flexible printed wiring circuit 23, and a light guide plate 27 disposed on the light-reflecting member 24. The light guide plate 27 propagates illuminating light emitted from the light source 22 and emits the illuminating light through a main surface. The illuminating light emitted through a main surface 27a of the light guide plate 27 is transmitted through the rubber sheet 28 and back-lights the input keys 21.

The light source 22 is disposed on the flexible printed wiring circuit 23 such that the light source 22 is electrically connected to the flexible printed wiring circuit 23. The light source 22 includes, for example, a light emitting diode (LED). Alternatively, the light source 22 may includes a laser diode (LD), a cold-cathode fluorescent lamp, or other parts that emit illuminating light.

The flexible printed wiring circuit 23 is a wiring circuit that includes a conductive layer and an insulating layer (not shown) and is provided with a flexible electrical circuits formed thereon. When the individual input keys 21 are pressed, the flexible printed wiring circuit 23 electrically communicates a signal generated with the individual dome switches 25 disposed on the flexible printed wiring circuit 23. In addition, the flexible printed wiring circuit 23 supplies power to the light source 22.

The light-reflecting member 24 reflects light leaked from the light guide plate 27 through a lower surface side (flexible printed wiring circuit 23 side) toward an upper surface side (input key 21 side) in order to reuse the light for back-lighting the input keys 21, thereby improving light use efficiency. In addition, the light-reflecting member 24 similarly upwardly reflects light from the light source 22 not having been incident upon the light guide plate 27 but having been leaked downward. Thus, light use efficiency is further improved. The light-reflecting member 24 is formed, for example, by printing white ink in an upper area of the flexible printed wiring circuit. Reflectivity can be further improved if the ink includes a light scattering agent or so forth. Alternatively, the light-reflecting member 24 may be separately formed of a sheet-like part and placed on the flexible printed wiring circuit 23.

The rubber sheet 28 is formed of an elastic body in order to support the input keys 21 and to transfer pressing force applied to the input keys 21 to the dome switches 25. The rubber sheet 28 is formed of, for example, rubber. In addition, the rubber sheet 28 includes protrusion-like presser bars 29 on the lower side thereof, thereby reliably transferring the pressing force applied to the input keys 21 to the dome switches 25 and improving tactile feeling.

Semicircular domes included in the dome switches 25 are formed by, for example, press working stainless steel. This structure is suitable for giving tactile feeling when the switches are pressed. The domes are sufficient if they are formed of a material having a conductive property. Therefore, metal such as copper or a copper alloy can be used. The thickness of the domes is, for example, 0.01-0.1 mm. The height of individual dome switches 25 is, for example, 0.15-0.5 mm.

The light guide plate 27 includes a light-receiving surface 30 on a side on the light source 22 side. Illuminating light emitted from the light source 22 enters the light guide plate 27 through the light-receiving surface 30, and propagates in the light guide plate 27 while undergoing repeated total internal reflection.

The light guide plate 27 also includes light emitting parts 26 at positions corresponding to the input keys 21 in a main surface 27b on a lower surface side (flexible printed wiring circuit 23 side) thereof. The light emitting parts 26 are concavo-convex patterns formed in the main surface 27b of the light guide plate 27. The light guide plate 27 may be fabricated in a usual manner such as injection molding or press molding using dies. The light emitting parts 26 including the concavo-convex patterns may be simultaneously formed with the fabrication of the light guide plate 27. Alternatively, the light guide plate 27 may be fabricated in advance, and then the light emitting parts 26 may be formed by press molding, laser beam machining, sandblasting, or so forth. Alternatively, the light emitting parts 26 may be formed by printing ink including a light scattering agent, or printing ink having an index of refraction different from that of the material of the light guide plate 27. This can be fabricated in a usual manner such as screen printing or ink jet printing. The light emitting parts 26 may be formed in either of the main surface 27a and the main surface 27b of the light guide plate 27.

Illuminating light having entered through the light-receiving surface 30 propagates in the light guide plate 27 while undergoing total internal reflection. However, the conditions for total internal reflection are not met due to the light emitting parts 26, and rays of the illuminating light are emitted through the main surface on the upper surface side (input key 21 side) of the light guide plate 27 so as to back-light the input keys 21. Meanwhile, rays of the illuminating light having been emitted through the lower surface side of the light guide plate 27 due to elimination of the conditions for total internal reflection as described above are reflected back by the light-reflecting member 24 toward the upper surface side of the light guide plate 27 and reused in back-lighting the input keys 21.

The light guide plate 27 is formed of a material having a light-transmissive property, for example, such as polycarbonate resin, polyethylene terephthalate resin, acrylic type resin, urethane resin, cycloolefin type resin, or silicone resin. The thickness of the light guide plate 27 is, for example, 125-200 µm. The thickness of the light guide plate 27 is preferably 50-100 µm in terms of reducing the thickness of the mobile-phone.

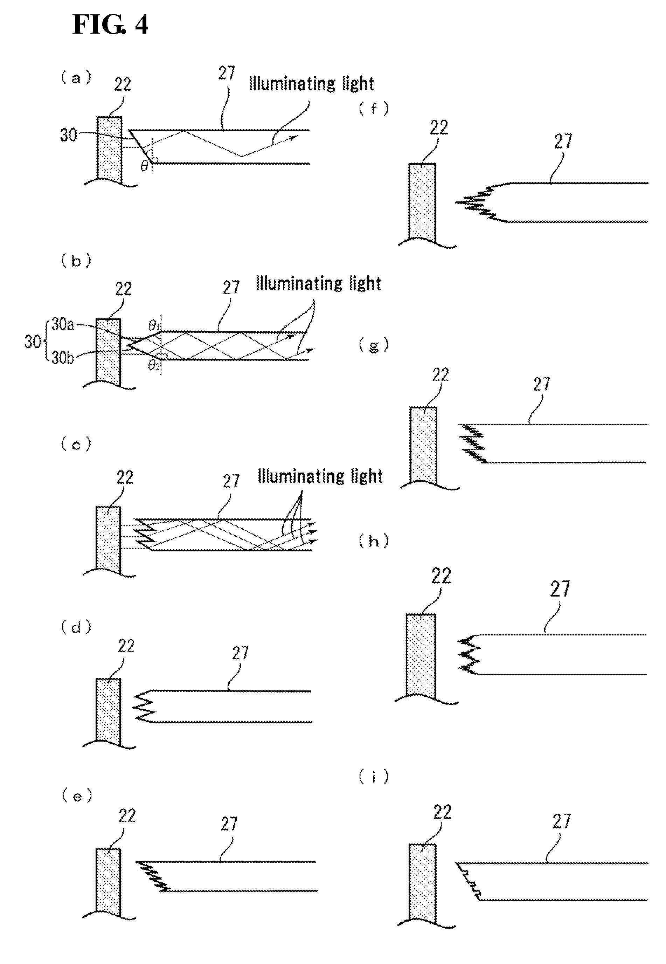

The (a) to (i) portions of Fig.4 are enlarged sectional views of part A in Fig. 3, which is in the vicinity of the light-receiving surface of the light guide plate. As illustrated in the (a) portion of Fig.4, the light-receiving surface 30 of the light guide plate 27 is inclined at an inclination angle θ relative to a plane perpendicular to the main surfaces 27a and 27b of the light guide plate 27.

As illustrated in Fig. 4, out of the rays of illuminating light emitted from the light source 22, rays of the illuminating light directed substantially parallel to the main surface of the light guide plate are once caused to be refracted upon entering the light guide plate 27 due to the inclination of the light-receiving surface. By doing this, the inclination of the light-receiving surface 30 causes the rays of the illuminating light, which would enter the light guide plate 27 in straight paths without being refracted and pass through the light guide plate without undergoing total internal reflection if the light-receiving surface 30 were not inclined, to always enter the light guide plate 27 at an angle. Thus, the rays of the illuminating light propagate while undergoing repeated total internal reflection. When illuminating light propagates while undergoing total internal reflection as described above, the conditions for total internal reflection are not met due to the light emitting parts 26 with a certain probability. Therefore, illuminating light is emitted through the main surface of the light guide plate 27 toward the upper surface side and back-lighting the input keys 21.

In general, although the LED and so forth used as the light source emit light at certain divergence angles, the great majority of the light components are parallel to the main surface of the light guide plate. When the light-receiving surface 30 is inclined at the inclination angle θ as described above, these parallel light components are not wasted by passing through the light guide plate 27 in straight paths. Instead, these light components can be used as light that back-lights the input keys 21. Thus, the inclination of the light-receiving surface 30 allows light use efficiency to be improved, thereby achieving power saving. In addition, by reducing the thickness of the light guide plate, the area of the light-receiving surface 30 is decreased and light combining efficiency between the light source 22 and the light guide plate 27 is decreased. Even in such a case, light use efficiency of illuminating light having entered the light guide plate 27 is improved. This can maintain brightness in back-lighting the input keys 21 and can also compensate for a decrease in illumination intensity due to reduction of the thickness.

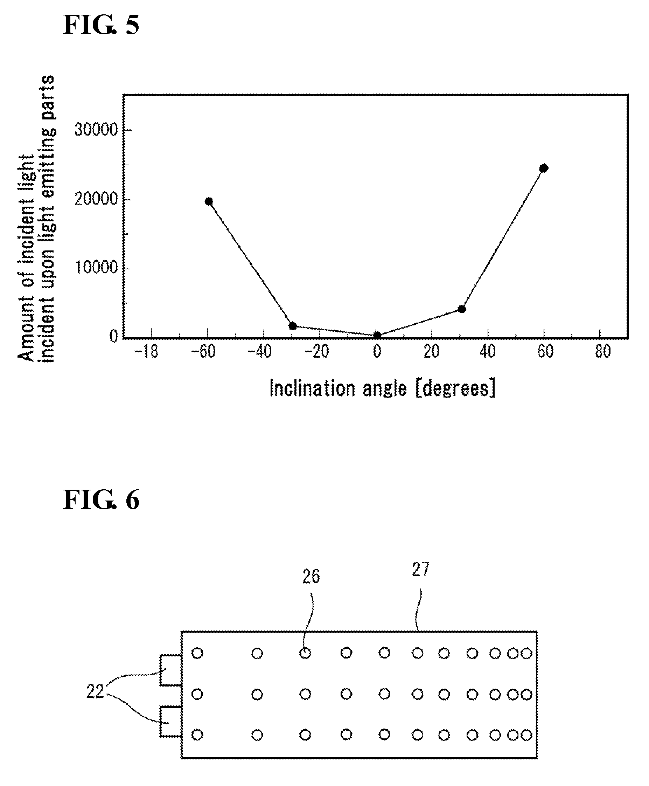

Figure 5 is a graph illustrating the relationship between the inclination angle of the light-receiving surface and the amount of incident light incident upon the light emitting parts formed in the main surface of the light guide plate. It is noted that the amount of incident light represented along the horizontal axis is in relative value.

Here, analysis conditions will be described. The light guide plate is formed of polycarbonate resin having an index of refraction of 1.59 and thickness of 125 µm. The light emitting parts are formed of polymethyl methacrylate resin having an index of refraction of 1.48. Light emitting parts are provided in the main surface of the light guide plate 27 such that patterns, each of which has the diameter of 220 µm and the height in a semicircular shape of 13 µm, are arranged at a pitch of 3.5 mm. The analysis was performed by setting illuminating light emitted from the light source 22 to have a wave length of 465 nm and a half power angle of 105 degrees.

In accordance with the graph illustrated in Fig. 5, it can be understood that the amount of light incident upon the light emitting parts 26 increases as the inclination angle θ of the light-receiving surface 30 becomes larger. This is because, in the light guide plate 27, the amount of light parallel to the main surface 27a and 27b decreases and the amount of light that propagates while undergoing repeated total internal reflection increases as the light-receiving surface 30 is increasingly inclined. Thus, light is made incident upon the light emitting parts 26 with a high certainty. That is, the more the light-receiving surface 30 is inclined, the larger the amount of light is used in back-lighting the input keys 21 and the more light use efficiency is improved.

Here, the inclination angle θ of the light-receiving surface 30 is suitable to be 30 to 60 degrees. If the inclination angle θ is smaller than 30 degrees, illuminating light does not undergo total internal reflection in the light guide plate 27, or rays of the illuminating light that are hardly reflected in the light guide plate 27 and pass through the light guide plate 27 increase. Thus, the amount of light that is wasted by not being used in back-lighting increases. In contrast, if the inclination angle θ is larger than 60 degrees, the amount of light reflected off the inclined light-receiving surface 30 increases. This degrades the combining efficiency and decreases the absolute amount of illuminating light that is allowed to enter the light guide plate 27. Therefore, the inclination angle θ is preferably 30 to 60 degrees in terms of improving light use efficiency in the entirety of the light guide plate. In addition, the inclination angle θ is more preferably 45 to 60 degrees.

The light-receiving surface 30 is inclined at the inclination angle θ. The light-receiving surface 30 may be formed by molding simultaneously with the formation of the light guide plate 27 by, for example, injection molding or press molding using dies when the light guide plate 27 is formed. Alternatively, the light-receiving surface 30 inclined at the inclination angle θ may be formed after the light guide plate 27 has been fabricated, by press molding using dies, machining, or so forth.

### (First Modification)

The (b) portion of Fig.4 is a modification of the light-receiving surface 30 illustrated in the (a) portion of Fig.4. According to the (b) portion of Fig.4, the light-receiving surface 30 includes inclined upper and lower light-receiving surfaces 30a and 30b, which are formed so as to protrude toward the light source 22 and the light guide plate 27 has a decreasing thickness. Here, the inclination angles of the light receiving surfaces 30a and 30b of the light-receiving surface 30 relative to a plane perpendicular to the main surfaces 22 are respectively represented as θ₁ and θ₂. Also in the present modification, the inclination angles θ₁ and θ₂ are preferably 30 to 60 degrees in terms of improving light use efficiency in the entirety of the light guide plate. In addition, the inclination angles θ₁ and θ₂ are more preferably 45 to 60 degrees. The inclination angles θ₁ and θ₂ are not necessarily the same angle. The inclination angles θ₁ and θ₂ may be angles different from each other.

Illuminating light emitted from the light source 22 has a certain divergence angle. Therefore, making the light-receiving surface 30 have a plurality of inclination angles causes rays of the illuminating light that pass through the light guide plate 27 in straight paths to be decreased as much as possible even when illuminating light having a divergence angle has entered. Thus, it is suitable for further improving light use efficiency.

### (Second Modification)

The (c) and (d) portions of Fig.4 illustrate the light-receiving surfaces, in which the light-receiving surface 30 illustrated in the (a) and (b) portions of Fig.4 further includes a plurality of inclined light-receiving surfaces. The (e) to (h) portions of Fig.4 illustrate the light-receiving surfaces, in which the light-receiving surfaces 22 illustrated in the (a) to (d) portions of Fig.4 have grooves that extends in a direction substantially parallel to the main surfaces 27a and 27b and have triangle-shaped sections. The (i) portion of Fig.4 illustrates the light-receiving surface, in which the light-receiving surface 30 illustrated in the (a) portion of Fig.4 has grooves that are substantially parallel to the main surfaces 27a and 27b and have a rectangle-shaped section.

With the second modifications, an incident angle of illuminating light that enters the light guide plate 27 can be more finely deflected and rays of the illuminating light that pass through the light guide plate 27 in straight paths can be further decreased. Thus, light use efficiency is further improved.

Here, in the above-described modifications, the thickness is constant in each light guide plate. In addition, when the light guide plate is thinner than the size of the light source, the thickness of the light guide plate near the light-receiving surface may be increased to about the size of the light source and the light-receiving surface inclined at an inclination angle as above-described may be provided. By doing this, light emitting efficiency can be further improved without decreasing combining efficiency between the light source and the light guide plate. Since overall light use efficiency is improved, power saving and reduction in thickness of the light guide plate can be achieved.

### (Third Modification)

Figure 6 is a plan view illustrating patterns of the light emitting parts formed in the main surface of the light guide plate according to a third modification to the embodiment.

As described in Fig. 6, each light emitting part 26 is formed such that, as the distance between the pattern that defines the light emitting part 26 and the light source 22 increases, the distances between the pattern and adjacent patterns are reduced in order to increase the density of the light emitting parts 26. By doing this, the input keys 21 can be evenly back-lit with the entirety of the light guide plate 27 without reduction in the amount of illuminating light emitted through the light emitting parts 26 even at positions away from the light source 22. That is, reliable back-lighting can be ensured while light use efficiency is improved and power saving can be achieved.

### (Fourth Modification)

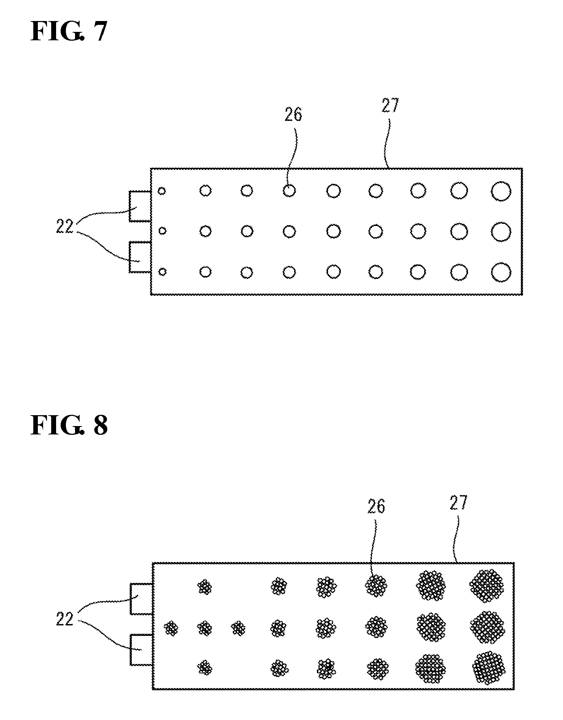

Figure 7 is a plan view illustrating the patterns of the light emitting parts formed in the main surface of the light guide plate according to a fourth modification to the embodiment.

As described in Fig. 7, each light emitting part 26 is formed such that, as the distance between the pattern that defines the light emitting part 26 and the light source 22 increases, the size of the pattern is increased in order to increase the density of the light emitting parts 26. By doing this, the input keys 21 can be evenly back-lit with the entirety of the light guide plate 27 without reduction in the amount of illuminating light emitted through the light emitting parts 26 even at positions away from the light source 22. That is, reliable back-lighting can be ensured while light use efficiency is improved and power saving can be achieved.

### (Fifth Modification)

Figure 8 is a plan view illustrating the patterns of the light emitting parts formed in the main surface of the light guide plate according to a fifth modification to the embodiment.

As described in Fig. 8, the light emitting parts 26 are provided at positions corresponding to the input keys 21, and each light emitting part 26 is formed such that, as the distance between the light emitting part 26 and the light source 22 increases, the number of the patterns that define the light emitting part 26 increases in order to increase the density of the light emitting parts 26. By doing this, only the input keys 21 intended to be back-lit can be illuminated and the input keys 21 can be evenly back-lit with the entirety of the light guide plate 27 even at positions away from the light source 22. In addition, light emission does not occur at positions other than positions corresponding to the input keys 21. Therefore, this modification is suitable for improving light use efficiency and achieving power saving.

In the fifth modification, it has been described that the number of the patterns is increased (distances between the patterns are decreased) at positions corresponding to the input keys 21 in order to evenly back-light the input keys 21. With the light guide plate according to the third and fourth modifications, the same advantages can be achieved by forming the light emitting parts 26 only at positions corresponding to the input keys 21 although they are not shown.

The shape of each pattern described here is not particularly limited. The shape may be either of a circle, rectangle, a shape of a character, a shape of a symbol, and so forth. The pattern may be a concave shape having a dent instead of a convex shape having a protrusion in the main surface 22. Furthermore, the pattern may be formed by printing ink that includes a light scattering agent. In this case, the input keys 21 can be evenly back-lit by increasing reflectivity of the light scattering agent, increasing the content of the light scattering agent, or changing the index of refraction of the ink as distances between the individual patterns and the light source 22 increase.

Here, it has been described that the input keys of the mobile-phones are back-lit using the light guide plates according to the present invention. However, the light guide plates can be similarly used for, for example, electronic appliances having key pads such as personal digital assistants (PDAs; mobile terminals for personal use). In addition, the light guide plates according to the present invention can also be similarly used as backlights of liquid crystal display devices. Although the flexible printed wiring circuit is described as part of the wiring module and as a wiring circuit that communicates electrical signals and so forth, a rigid type wiring circuit may instead be used.

The structures of the embodiments according to the present invention have been disclosed above. However, these structures are illustrated as only examples and the scope of the present invention is not limited to the scope of what is described herein. The scope of the present invention is described in Claims and includes any modification to the extent that a meaning and a scope of a modification are equivalent to what is described in Claims.

### Industrial Applicability

Light guide plates and wiring modules according to the present invention are assembled into electronic appliances such as mobile-phones, and used to back-light key switches, liquid crystal display screens and so forth.

### Reference Signs List

- 10: mobile-phone
- 12: display part
- 13: input part
- 14: hinge part
- 15: liquid crystal display device
- 16: speaker
- 17: microphone
- 20: input module
- 21: input key
- 22: light source
- 23: flexible printed wiring circuit
- 24: light-reflecting member
- 25: dome switch
- 26: light emitting part
- 27: light guide plate
- 27a: main surface
- 27b: main surface
- 28: rubber sheet
- 29: presser bar
- 30: light-receiving surface
- 31: wiring module

### Citation List

### Patent Literature

PTL 1: Japanese Unexamined Patent Application Publication No. 5-210014
PTL 2: Japanese Unexamined Patent Application Publication No. 2004-69751

## Claims

1. A light guide plate having a substantially flat shape and used as a backlight for an electronic appliance, the light guide plate introducing thereinto illuminating light emitted from a light source through part of a side surface thereof and directing the illuminating light out of the light guide plate through light emitting parts formed in a main surface of the light guide plate,
wherein a light-receiving surface for the illuminating light on the side surface is inclined relative to a plane perpendicular to the main surface.

2. The light guide plate according to Claim 1,
wherein an inclination angle of the light-receiving surface is in a range of 30 to 60 degrees relative to the plane perpendicular to the main surface.

3. The light guide plate according to Claim 1 or Claim 2,
wherein the side surface includes a plurality of the inclined light-receiving surfaces.

4. The light guide plate according to one of Claims 1 to 3,
wherein the light-receiving surface further includes a groove that extends in a direction substantially parallel to the main surface.

5. The light guide plate according to one of Claims 1 to 4,
wherein an antireflection coat (AR coat) layer is formed on the light-receiving surface.

6. The light guide plate according to one of Claims 1 to 5,
wherein the light emitting parts are concavo-convex patterns defined by protrusions or dents formed in the main surface, or printing patterns including a light scattering agent, and
wherein, each light emitting part is formed such that, as a distance between the pattern and the light source increases, a distance between the pattern and an adjacent pattern is reduced, or a size of the pattern is increased in order to increase a density of the patterns.

7. A wiring module, comprising:
a flexible printed wiring circuit that includes a light source placement part and a switch part;
a light-reflecting member laminated on the flexible printed wiring circuit; and
the light guide plate according to one of Claims 1 to 6, the light guide plate being disposed over the light-reflecting member.

8. An electronic appliance, comprising:
the light guide plate according to one of Claims 1 to 6, or the wiring module according to Claim 7.
